# EUROPÄISCHE PATENTSCHRIFT

(11) **EP 1 764 290 B1**
(45) Veröffentlichungstag und Bekanntmachung des Hinweises auf die Patenterteilung: **30.06.2010**
(21) Anmeldenummer: 05020077.3
(22) Anmeldetag: 15.09.2005
(51) Int. Cl.: B62D 53/08

(54) **Sattelkupplung**
Fifth wheel coupling
Sellette d'attelage

(43) Veröffentlichungstag der Anmeldung: 21.03.2007
(60) Teilanmeldung: 09179619.3
(73) Patentinhaber: SAF-HOLLAND Verkehrstechnik GmbH, 78224 Singen-Hohentwiel (DE)
(72) Erfinder: Roth-Schuler, Christian, 78224 Singen (DE); Schneider, Dirk, 81371 München (DE)
(74) Vertreter: Bauer, Clemens

(56) Entgegenhaltungen:
- EP-A- 0 481 928
- US-A- 5 765 849
- US-A1- 2003 047 906

## Beschreibung

Die Erfindung bezieht sich auf eine Anordnung einer Sattelkupplung an einem Fahrzeugrahmen, wobei die Sattelkupplung eine Kupplungsplatte und mindestens zwei Lagerböcke zur lagernden Befestigung der Kupplungsplatte an dem Fahrzeugrahmen eines Zugfahrzeuges aufweist, wobei die Lagerböcke einen Lagerungsbereich und einen Befestigungsbereich aufweisen.

Im Kraftfahrzeugverkehr werden vermehrt Schlepperkombinationen mit Sattelkupplungen eingesetzt. Die Kombination besteht aus einem Zugfahrzeug und mindestens einem Anhänger. Das Zugfahrzeug weist eine Kupplungsplatte auf, in die ein Zapfen, der so genannte Königszapfen des Anhängers eingeführt und eingekuppelt wird. Die Kupplungsplatte ist über Lagerböcke mit dem Fahrzeugrahmen des Zugfahrzeuges lagernd verbunden. Die Lagerböcke enthalten Lagerelemente, die ein Schwenken der Kupplungsplatte quer zur Fahrtrichtung des Zugfahrzeuges ermöglichen.

Aus der WO 2004/052713 A2 ist eine gattungsgemässe Anordnung bekannt. Die Kupplungsplatte wird über Lagerböcke mit dem Fahrzeugrahmen verbunden. Der Befestigungsbereich des Lagerbockes wird mittels Schrauben seitlich am Fahrzeugrahmen befestigt. Die Querkräfte, die vom Anhänger auf die Kupplungsplatte ausgeübt werden, werden vollständig durch den Lagerbereich des Lagerbockes aufgefangen. Der Lagerbock selbst ist ein einstückiges Gussformteil.

Die EP 0 481 928 A1 betrifft eine Sattelkupplung, umfassend eine Kupplungsplatte, zwei Lagerböcke sowie eine Aufspannplatte, welche an einem längsverschieblichen Träger befestigt sind.

Ausgehend von diesem Stand der Technik ist es Aufgabe der Erfindung, eine Sattelkupplung anzugeben, die möglichst einfach herstellbar ist, die einem möglichst geringem Gewicht aufweist und die möglichst hohe Kräfte zwischen Anhänger und Zugfahrzeug übertragen kann.

Diese Aufgabe wird gelöst durch eine Sattelkupplung gemäß Anspruch 1, insbesondere umfassend eine Kupplungsplatte und mindestens zwei Lagerböcke zur lagernden Befestigung der Kupplungsplatte an einem Fahrzeugrahmen des Zugfahrzeuges, wobei der Lagerbock einen Lagerungsbereich und einen Befestigungsbereich aufweist, wobei der Befestigungsbereich zur lösbaren Befestigung des Lagerbockes an einer Querstrebe im Fahrzeugrahmen des Zugfahrzeuges ausgebildet ist.

Bevorzugte Weiterbildungen der Erfindung ergeben sich aus den abhängigen Ansprüchen.

Es ist von Vorteil, dass durch die Anbindung der Sattelkupplung der Fahrzeugrahmen selbst nicht geschwächt, sondern verstärkt wird. Dies wird dadurch erreicht, dass der Befestigungsbereich des Lagerbocks zur lösbaren Befestigung an einer Querstrebe des Fahrzeugrahmen ausgebildet ist. Dies wird auch dadurch erreicht, dass der Befestigungsbereich an einem Knotenblech zwischen Querstrebe und Fahrzeugrahmen ausgebildet ist. Durch die direkte Anbindung der Sattelkupplung an dem Fahrzeugrahmen wird ein direkter und genau definierter Kraftfluss für die Kräfte erreicht, die vom Anhänger auf dem Zugfahrzeug wirken.

Es ist auch von Vorteil, dass die Befestigung des Lagerbockes möglichst einfach montiert und demontiert werden kann. Dies wird dadurch erreicht, dass die Querstrebe als ein U-Profilträger ausgebildet ist.

Es ist weiter auch von Vorteil, dass die Kräfte, die zwischen Zugfahrzeug und Anhänger und umgekehrt übertragen werden müssen, möglichst direkt in den Fahrzeugrahmen des Zugfahrzeuges eingeleitet werden. Dies wird dadurch erreicht, dass der Befestigungsbereich des Lagerbockes ein U-förmiges Fussteil aufweist, wobei die Schenkel des U die Querstrebe formschlüssig umgreifend ausgebildet sind.

Drei Ausführungsbeispiele der Erfindung werden anhand der Figuren beschrieben.

### Es zeigen:

Figur 1 eine perspektivische Sicht auf eine erfindungsgemässe Sattelkupplung mit links und rechts unterschiedlichen Varianten der Anbindung,
Figur 2 eine Sicht auf die Sattelkupplung von Figur 1, gesehen in der Fahrtrichtung,
Figur 3 einen Schnitt durch eine Sattelkupplung gemäss der ersten Variante der Anbindung,
Figur 4 einen Schnitt durch eine Sattelkupplung gemäss der zweiten Variante der Anbindung,
Figur 5 eine weitere perspektivische Sicht auf die Sattelkupplung von Figur 1,
Figur 6 eine Sicht auf die Sattelkupplung von Figur 3, gesehen von oben und
Figur 7 eine weitere Sicht auf eine Sattelkupplung mit einem Knotenblech zur Direktanbindung.

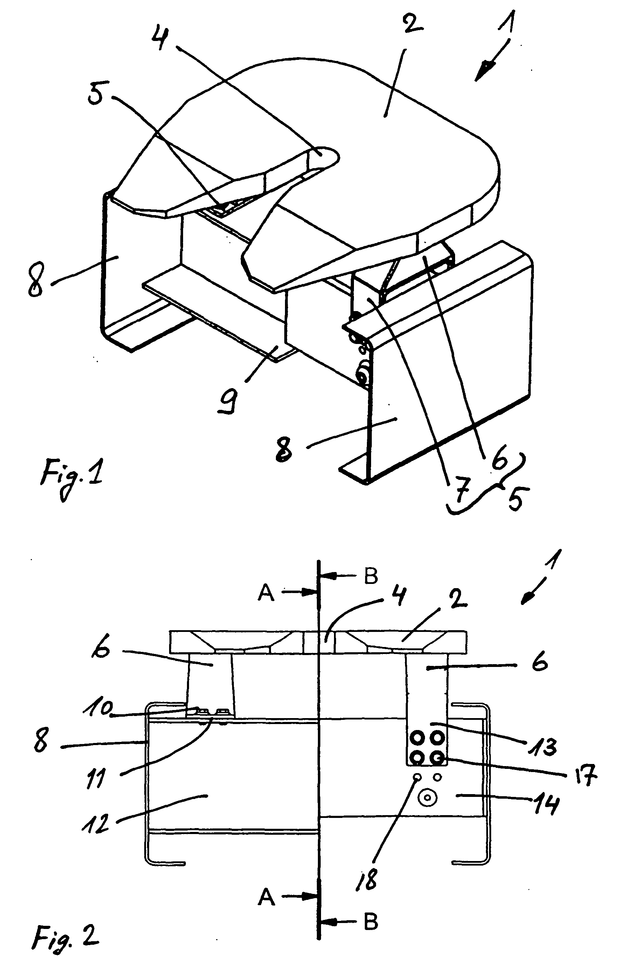

In Figur 1 ist eine Sattelkupplung 1 perspektivisch und schematisch dargestellt. Die Sattelkupplung 1 ist in Figur 1 mit zwei unterschiedlichen Ausführungsbeispielen der Anbindung dargestellt. Die Sattelkupplung 1 umfasst eine Kupplungsplatte 2 mit einer Einführöffnung 4 für den Königszapfen des Anhängers, der hier nicht dargestellt wurde. Die Kupplungsplatte 2 ist lagernd befestigt auf zwei Lagerböcke 5. Der Lagerbock 5 dient zur lagernden Aufnahme der Kupplungsplatte 2 und zur lösbaren Befestigung an einem Fahrzeugrahmen. Der Lagerbock 5 besteht aus einem oberen Lagerungsbereich 6 und einem unteren Befestigungsbereich 7. Von dem Fahrzeugrahmen sind in Figur 1 zwei in Fahrtrichtung verlaufend angeordnete Abschnitte 8 der Längsträger dargestellt. Zwischen den Abschnitten 8 der Längsträger des Fahrzeugrahmens ist eine Querstrebe 9 angeordnet.

Zum einfacheren Vergleich der zwei Ausführungsbeispiele sind der Lagerbock 5 und die Querstrebe 9 sind in Fahrtrichtung gesehen auf der linken und auf der rechten Seite des Fahrzeugrahmens 8 unterschiedlich dargestellt. In Wirklichkeit ist die Querstrebe 9 links und rechts identisch ausgebildet und die Lagerböcke 5 sind identisch oder spiegelsymmetrisch ausgebildet. Eine vollkommen identische Ausbildung der linken und rechten Lagerböcke 5 ist vorteilhaft, weil beide Teile auswechselbar sind und in der Fertigung nur ein Teil hergestellt werden muss. Die Querstrebe kann auch mit jedem anderen Querschnitt ausgebildet werden, beispielsweise als Gussteil oder als Formteil aus Stahlblech.

In Figur 2 ist die Sattelkupplung von Figur 1 nochmals, gesehen in der Fahrtrichtung, dargestellt. Auf der linken Seite ist der Lagerbock 5 mit einem T-förmigen Fussteil 10 ausgebildet. Der Steg 11 des T-förmigen Fussteiles 10 verläuft waagrecht und parallel zur Oberseite der Querstrebe 9. Die Querstrebe 9 ist auf der linken Seite als ein Doppel-T-Profilträger 12 ausgebildet.

Auf der rechten Seite ist der Lagerbock 5 mit einem U-förmigen Fussteil 13 ausgebildet. Die Querstrebe 9 ist ebenfalls als ein U-Profilträger 14 ausgebildet. Die Schenkel 15,16 des U-förmigen Fussteiles 13 umgreifen den U-Profilträger 14 formschlüssig. Bei der U-förmigen Ausbildung des Fussteiles 13 und der Querstrebe 14 sind die Anlageflächen zwischen Lagerbock und Querstrebe grösser als bei der T-förmigen Ausbildung. Die lösbare Anbindung zwischen der Kupplungsplatte 2 und dem Fahrzeugrahmen 8 wird durch Schrauben 17 und Bohrungen 18, die in Fahrtrichtung verlaufend angeordnet sind, hergestellt. Die Kräfte, die auf der Sattelkupplung 1 im Fahrbetrieb wirken, können über eine grössere Angriffsfläche und über mehr Schraubverbindungen aufgeteilt werden. Weil eine grössere Fläche zur Verfügung steht, ist diese Art der Anbindung anpassungsfähiger an den verschieden Typen von Fahrzeugrahmen 8.

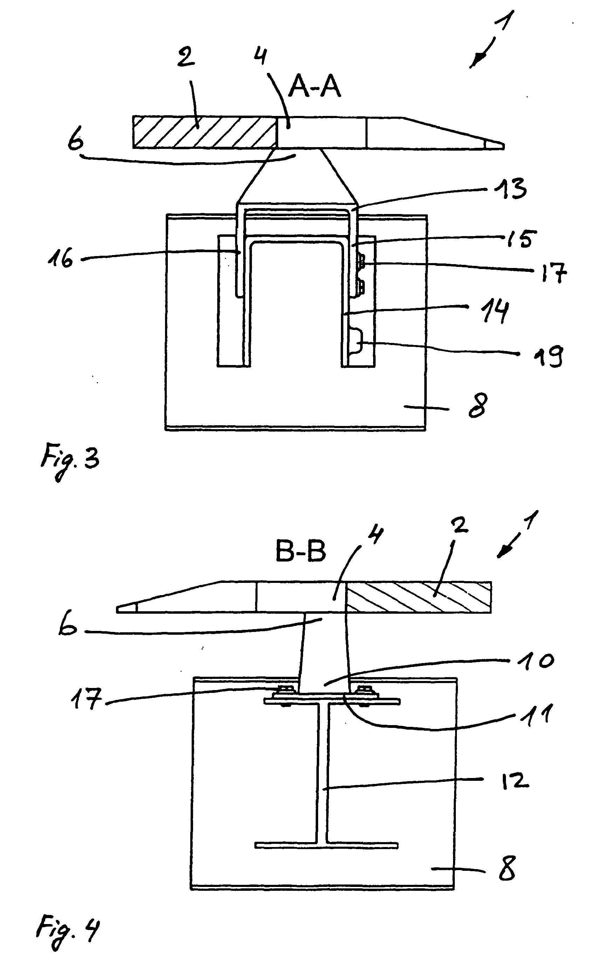

In den Figuren 3 und 4 ist die Sattelkupplung 1 in Fahrtrichtung geschnitten entlang der Mittellinie dargestellt. In Figur 3 ist die Sattelkupplung 1 gemäss einem ersten Ausführungsbeispiel mit U-förmigen Trägern 13,14 und in Figur 4 ist die Sattelkupplung gemäss dem zweiten Ausführungsbeispiel mit T-förmigen Trägern 10,12 dargestellt.

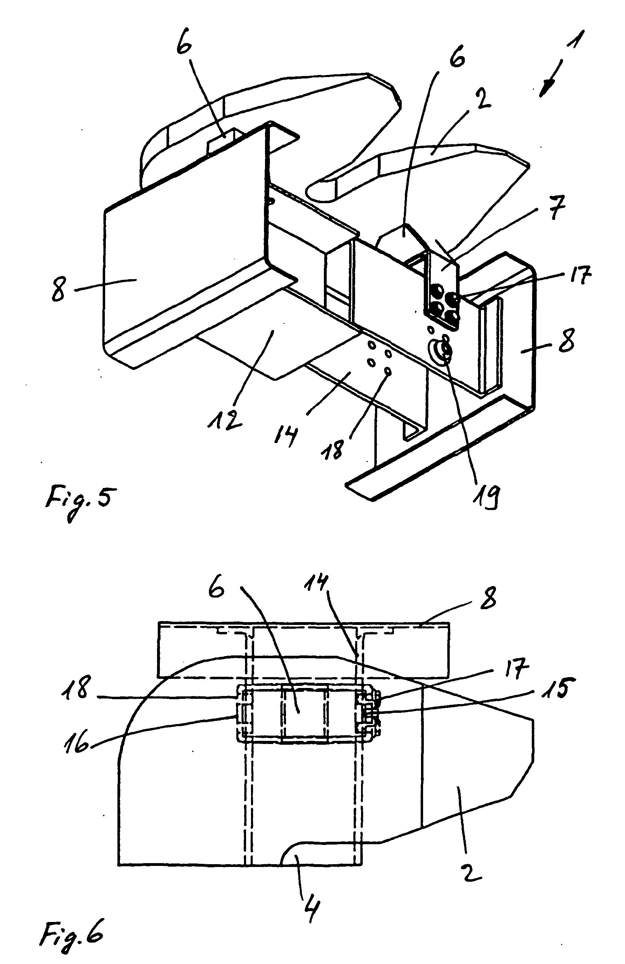

In Figur 5 ist die Sattelkupplung 1 von Figur 1 nochmals perspektivisch gesehen von der Unterseite des Fahrzeugrahmens 8 dargestellt. Am U-förmigen Profilträger 14 ist ein Befestigungspunkt 19 für die Aufhängung der Hinterachse dargestellt.

In Figur 6 ist die rechte Hälfte der Sattelkupplung 1 gesehen von oben dargestellt. In Figur 6 ist ersichtlich, wie das Fussteil 13 mit den Schenkeln 15,16 des Lagerbockes 5 den U-Profilträger 14 formschlüssig umschliesst und wie die Schrauben 17 und Bohrungen 18 auf beiden Seiten der U-förmigen Querstrebe 14 angeordnet sind.

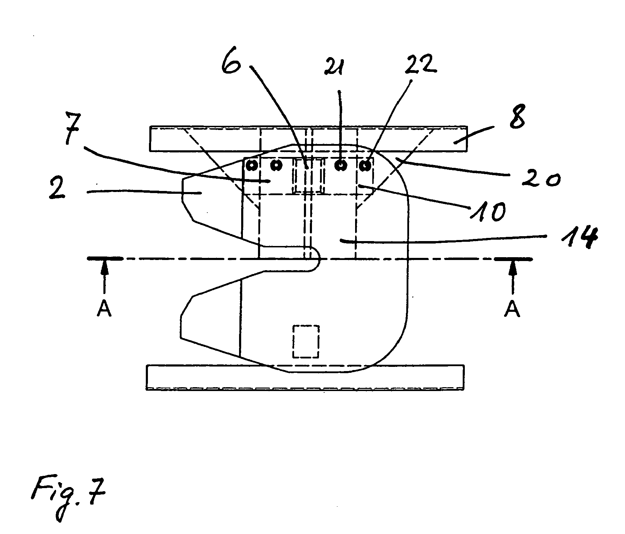

In Figur 7 ist in einem weiteren Ausführungsbeispiel dargestellt, wie der Befestigungsbereich 7 mit einem Knotenblech 20 zwischen Querstrebe 14 und Fahrzeugrahmen 8 verbunden ist. Das T-förmige Fussteil 10 ist mittels Schrauben 21,22 sowohl mit der Querstrebe 14 als auch mit dem Knotenblech 20 verbunden. Das Knotenblech 20 selbst kann mit dem Fahrzeugrahmen 8 verschweisst werden.

Insgesamt ist die Anbindung der Sattelkupplung 1 an einer Querstrebe 9,12,14 im Fahrzeugrahmen 8 einfach herzustellen, kann grosse Kräfte aufnehmen und kann an unterschiedlichen Typen von Fahrzeugrahmen 8 angepasst werden.

## Patentansprüche

1. Anordnung einer Sattelkupplung (1) an einem Fahrzeugrahmen (8),
wobei die Sattelkupplung (1) eine Kupplungsplatte (2) und zumindest zwei Lagerböcke (5) zur lagernden Befestigung der Kupplungsplatte (2) an dem Fahrzeugrahmen (8) eines Zugfahrzeugs aufweist,
wobei der Fahrzeugrahmen (8) eine Querstrebe (9, 12, 14) aufweist, und
wobei die Lagerböcke (5) einen Lagerungsbereich (6) und einen Befestigungsbereich (7) aufweisen, **dadurch gekennzeichnet,**
**dass** die Lagerböcke (5) über ihre Befestigungsbereiche (7, 11, 13) direkt an der zum Fahrzeugrahmen (8) des Zugfahrzeuges gehörenden Querstrebe (9, 12, 14) lösbar befestigt sind.

2. Anordnung (1) nach dem Anspruch 1, **dadurch gekennzeichnet, dass** der Befestigungsbereich (7) an einem Knotenblech (20) zwischen Querstrebe (9, 12, 14) und Fahrzeugrahmen (8) ausgebildet ist.

3. Anordnung (1) nach dem Anspruch 1 oder 2, **dadurch gekennzeichnet, dass** der Befestigungsbereich (7) des Lagerbockes (5) ein U-förmiges Fussteil (13) aufweist, wobei die Schenkel (15, 16) des U die Querstrebe (9, 14) formschlüssig umgreifend ausgebildet sind.

4. Anordnung (1) nach dem Anspruch 1 oder 2, **dadurch gekennzeichnet, dass** der Befestigungsbereich (7) des Lagerbockes (5) ein T-förmiges Fussteil (10) aufweist, wobei der Steg (11) des T waagrecht und parallel zur Oberseite der Querstrebe (9, 12) ausgebildet ist.

5. Anordnung (1) nach mindestens einem der Ansprüche 1 bis 4, **dadurch gekennzeichnet, dass** die Querstrebe (14) als ein U-Profilträger ausgebildet ist.

6. Anordnung (1) nach mindestens einem der Ansprüche 1 bis 4, **dadurch gekennzeichnet, dass** die Querstrebe (12) als ein Doppel-T-Profilträger ausgebildet ist.

7. Anordnung (1) nach mindestens einem der Ansprüche 1 bis 6, **dadurch gekennzeichnet, dass** das Fussteil (10, 13) Bohrungen (18) für Befestigungsschrauben (17) aufweist.

## Claims

1. Arrangement of a fifth wheel coupling (1) on a vehicle frame (8),
the fifth wheel coupling (1) comprising a coupling plate (2) and at least two bearing brackets (5) for supportive mounting of the coupling plate (2) on the vehicle frame (8) of a tractor vehicle,
the vehicle frame (8) having a transverse strut (9, 12, 14), and
the bearing brackets (5) having a bearing area (6) and a mounting area (7), **characterized in that**
the bearing brackets (5) are detachably mounted via their mounting areas (7, 11, 13) directly on the transverse strut (9, 12, 14) being part of the vehicle frame (8) of the tractor vehicle.

2. Arrangement (1) according to claim 1, **characterized in that** the mounting area (7) is formed on a gusset plate (20) between the transverse strut (9, 12, 14) and the vehicle frame (8).

3. Arrangement (1) according to claim 1 or 2, **characterized in that** the mounting area (7) of the bearing bracket (5) has a U-shaped foot section (13), the legs (15, 16) of the U being designed to interlock positively around of the transverse strut (9, 14).

4. Arrangement (1) according to claim 1 or 2, **characterized in that** the mounting area (7) of the bearing bracket (5) has a T-shaped foot section (10), the web (11) of the T being formed horizontally and parallel to the upper side of the transverse strut (9, 12).

5. Arrangement (1) according to at least one of claims 1 to 4, **characterized in that** the transverse strut (14) is embodied as a U-profile member.

6. Arrangement (1) according to at least one of claims 1 to 4, **characterized in that** the transverse strut (12) is embodied as a double T-profile member.

7. Arrangement (1) according to at least one of claims 1 to 6, **characterized in that** the foot section (10, 13) has holes (18) for fixing screws (17).

## Revendications

1. Agencement d'un attelage à sellette (1) sur un châssis de véhicule (8), dans lequel l'attelage à sellette (1) comprend une plaque d'attelage (2) et au moins deux blocs de montage (5) pour la fixation de la plaque d'attelage (2) sur le châssis (8) d'un véhicule tracteur,
dans lequel le châssis de véhicule (8) comprend une entretoise transversale (9, 12, 14), et
dans lequel les blocs de montage (5) comprennent une zone de montage (6) et une zone de fixation (7), **caractérisé en ce que**
les blocs de montage (5) sont fixés via leur zone de fixation (7, 11, 13) directement sur l'entretoise transversale (9, 12, 14) qui appartient au châssis (8) du véhicule tracteur, de manière détachable.

2. Agencement (1) selon la revendication 1, **caractérisé en ce que** la zone de fixation (7) est réalisée sur une tôle de liaison (20) entre l'entretoise transversale (9, 12, 14) et le châssis de véhicule (8).

3. Agencement (1) selon la revendication 1 ou 2, **caractérisé en ce que** la zone de fixation (7) du bloc de montage (5) comprend une partie de pied (13) en forme de U, telle que les branches (15, 16) du U sont réalisées de manière à enserrer l'entretoise transversale (9, 14) à coopération de formes.

4. Agencement (1) selon la revendication 1 ou 2, **caractérisé en ce que** la zone de fixation (7) du bloc de montage (5) comprend une partie de pied (10) en forme de T, telle que le pied (11) du T est réalisé horizontal et parallèle à la face supérieure de l'entretoise transversale (9, 12).

5. Agencement (1) selon l'une au moins des revendications 1 à 4, **caractérisé en ce que** l'entretoise transversale (14) est réalisée comme un profilé porteur en forme de U.

6. Agencement (1) selon l'une au moins des revendications 1 à 4, **caractérisé en ce que** l'entretoise transversale (12) est réalisée comme un profilé porteur en forme de double T.

7. Agencement (1) selon l'une au moins des revendications 1 à 6, **caractérisé en ce que** la partie de pied (10, 13) comporte des perçages (18) pour des vis de fixation (17).
